# EUROPÄISCHE PATENTSCHRIFT

(11) **EP 0 443 110 B1**
(45) Veröffentlichungstag und Bekanntmachung des Hinweises auf die Patenterteilung: **02.03.1994**
(21) Anmeldenummer: 90122463.4
(22) Anmeldetag: 26.11.1990
(51) Int. Cl.: B60R 22/18

(54) **Sicherheitsgurtanordnung für die Rücksitzanlage eines Kraftfahrzeuges**
Safety belt arrangement for the rear seat installation of a motor vehicle
Agencement de ceinture de sécurité pour les sièges arrières d'un véhicule automobile

(30) Priorität: 09.02.1990 DE 4003941
(43) Veröffentlichungstag der Anmeldung: 28.08.1991
(73) Patentinhaber: Dr.Ing.h.c. F. Porsche Aktiengesellschaft, 70435 Stuttgart (DE)
(72) Erfinder: Klein, Dieter, Dipl.-Ing. (FH), W-7251 Weissach-Flacht (DE); Wurl, Willi, W-7531 Niefern-Oeschelbronn (DE)

(56) Entgegenhaltungen:
- DE-A- 3 924 969
- PATENT ABSTRACTS OF JAPAN, Band 10, Nr. 277 (M-519)[2333], 19. September 1986;&JP-A-61 98 654 (NISSAN MOTOR CO., LTD) 16-05-1986
- PATENT ABSTRACTS OF JAPAN, Band 11, Nr. 16 (M-554)[2463], 16. Januar 1987;& JP-A-61 191 453 (NISSAN MOTOR CO., LTD) 26-08-1986

## Beschreibung

Die Erfindung betrifft eine Sicherheitsgurtanordnung für ein Kraftfahrzeug mit oben offener Karosserie gemäß dem Oberbegriff des Anspruchs 1.

Aus der gattungs gemäßen DE-A-39 24 969 ist ein zweisitziges Kraftfahrzeug mit oben offener Karosserie und einer Sicherheitsgurtanordnung bekannt, wobei auf entgegengesetzten Seiten einer hinteren Bodenplatte zwei Verankerungstürme aufgesetzt sind, die jeweils ein oberes Ende eines Schrägschultergurtes mit einem. Führungselement und einem endseitigen Gurtroller aufnehmen. Das Führungselement zum Umlenken des Schrägschultergurtes ist an eine obere Platte des Verankerungsturmes angeschraubt, wobei ein mit dem Gurtband zusammenwirkender Umlenkring des Führungselementes den Verankerungsturm in Richtung Fahrgastraum überragt.
Vom Umlenkring aus erstreckt sich das Gurtband innerhalb des Fahrgastraumes vertikal nach unten zum Gurtaufroller, der in einer Nische des Verankerungsturmes angeordnet ist. Der Gurtroller ist durch eine Öffnung vom Fahrgastraum aus in die Nische des Verankerungsturmes eingesetzt.

Bei einer weiteren bekannten Ausführung (DE-GM 78 34 906) ist der mit dem oberen Ende des Schrägschultergurtes verbundene Gurtaufroller an der Oberseite einer etwa horizontal ausgerichteten Hutablage befestigt, die sich hinter der Rücksitzanlage etwa in Höhe eines unteren Randes der Heckscheibe erstreckt.
Damit die auftretenden Kräfte aufbauseitig gut aufgenommen werden können, ist es bei dieser Sicherheitsgurtanordnung erforderlich, die Hutablage entsprechend steif auszubilden. Darüber hinaus eignet sich diese Anordnung nicht für Fahrzeuge mit einem Klappverdeck, das in zusammengeklapptem Zustand in einem hinter der Rücksitzanlage angeordneten Verdeckkasten untergebracht ist.

Aufgabe der Erfindung ist es, für Kraftfahrzeuge mit einem Klappverdeck und einem heckseitigen Verdeckkasten eine Sicherheitsgurtanordnung für die Rücksitzanlage zu schaffen, bei der der am oberen Ende des Schrägschultergurtes angebrachte Gurtaufroller funktionsgerecht angeordnet ist und hohe Kräfte aufnehmen kann.
Erfindungsgemäß wird diese Aufgabe durch die Merkmale des Anspruchs 1 gelöst. Weitere, die Erfindung in vorteilhafter Weise ausgestaltenden Merkmale enthalten die Unteransprüche.
Die mit der Erfindung hauptsächlich erzielten Vorteile sind darin zu sehen, daß durch die verdeckte Anordnung des Gurtaufrollers in einer Nische der vorderen Begrenzungswand des Verdeckkastens und durch das vorgelagerte Führungselement für den Schrägschultergurt eine gute Funktion aufweisende Sicherheitsgurtanordnung erzielt wird, wobei durch die Anbindung der Nische an einen Querträger des Verdeckkastens die auftretenden Kräfte gut aufgenommen und in den Aufbau eingeleitet werden.
Die den Gurtroller aufnehmende Nische läßt sich einfach herstellen und weist eine große Steifigkeit auf.
Ein Ausführungsbeispiel der Erfindung ist in der Zeichnung dargestellt und wird im folgenden näher erläutert:

Es zeigt:
- Fig. 1: eine Teilseitenansicht auf einen Personenwagen mit einem Klappverdeck,
- Fig. 2: eine Teilansicht von vorne auf eine Rücksitzanlage des Personenwagens mit einer Sicherheitsgurtanordnung,
- Fig. 3: eine perspektivische Ansicht von vorne auf eine vordere Begrenzungswand des Verdeckkastens.
- Fig. 4: einen Schnitt nach der Linie IV-IV der Fig. 3 in größerem Maßstab
- Fig. 5: einen Schnitt nach der Linie V-V der Fig. 4 in größerem Maßstab.

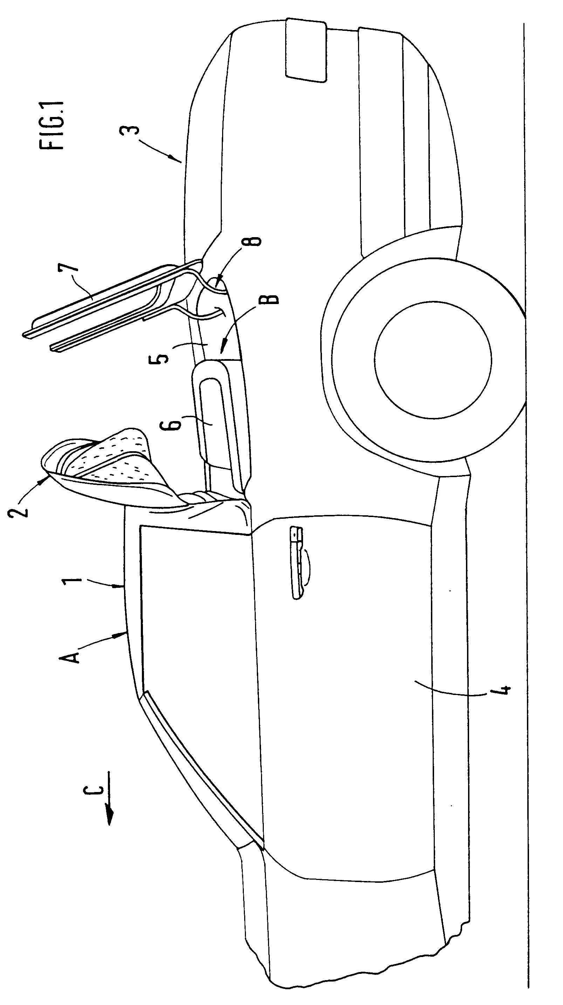

Ein Kraftfahrzeug 1 mit einem Klappverdeck 2 umfaßt im gezeigten Bereich einen Aufbau 3 mit seitlichen Türen 4, einen Verdeckkasten 5 und eine Rücksitzanlage 6 (Fig. 1).

Das Klappverdeck 2 ist von einer Schließstellung A in eine zusammengefaltete Stellung B bewegbar und umgekehrt, wobei das Klappverdeck 2 in der zusammengefalteten Stellung verdeckt innerhalb des Verdeckkastens 5 angeordnet ist. Der Verdeckkasten 5 ist durch eine schwenkbare Klappe 7 verschließbar, die über Scharniere 8 am Aufbau 3 angelenkt ist.

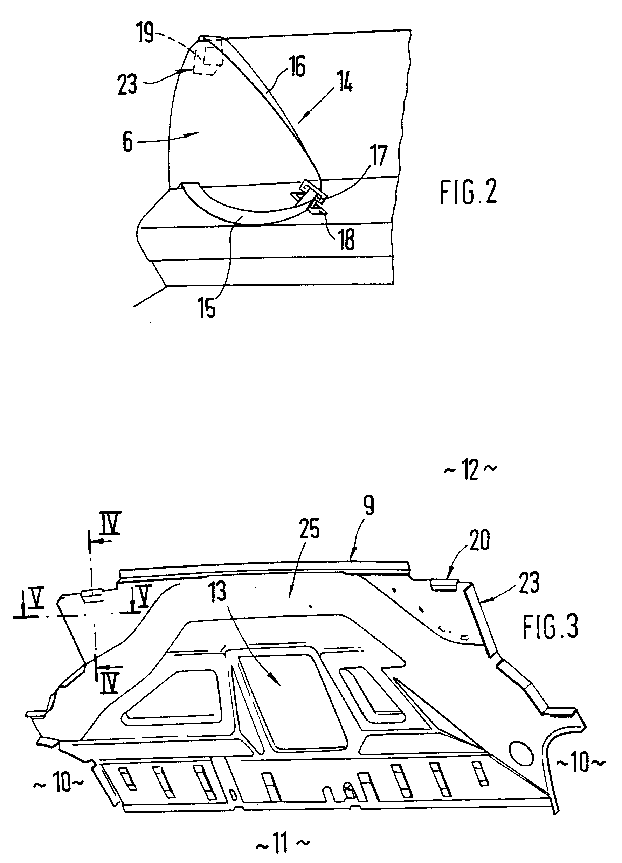

Der Verdeckkasten 5 ist in Fahrtrichtung C gesehen unmittelbar hinter der Rücksitzanlage 6 angeordnet und weist eine vordere Begrenzungswand 9 auf, die unten an die Bodenanlage und im seitlichen Bereich an die beiden Radhäuser 10 angeschlossen ist und eine Trennwand zwischen einem Fahrgastraum 11 und einem Kofferraum 12 darstellt (Fig. 3). In einem mittleren Bereich der Begrenzungswand 9 ist eine großflächige Öffnung 13 vorgesehen, wodurch eine Durchlademöglichkeit zwischen Kofferraum 12 und Fahrgastraum 11 gegeben ist (Fig. 3).

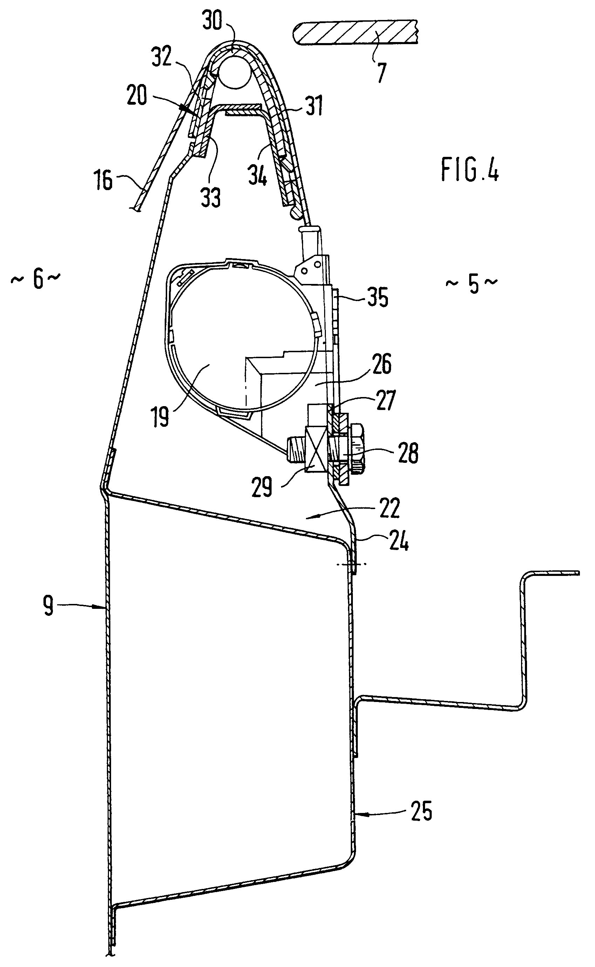

Zur Sicherung eines auf der Rücksitzanlage 6 sitzenden Insassen ist eine Sicherheitsgurtanordnung 14 vorgesehen, die vorzugsweise als Dreipunktsicherheitsgurt ausgebildet ist. Der Dreipunktsicherheitsgurt besteht aus einem Beckengurt 15 und einem Schrägschultergurt 16, die in einem gemeinsamen Verbindungsbereich eine Schloßzunge 17 aufweisen, welche mit einem aufbauseitigen Gurtschloß 18 verbindbar ist. Das Gurtschloß 18 ist benachbart einer Fahrzeuglängsmittelebene angeordnet. Ein obenliegendes Ende des Schrägschultergurtes 16 ist mit einem Gurtaufroller 19 verbunden. Gemäß den Fig. 3 und 4 ist der Schrägschultergurt 16 mittels eines Führungselementes 20 über den oberen Rand 21 der aufrechten Begrenzungswand 9 des Verdeckkastens 5 hinweggeführt und verläuft danach vertikal nach unten zum Gurtaufroller 19, der verdeckt in einer Nische 22 des Verdeckkastens 5 angeordnet ist.

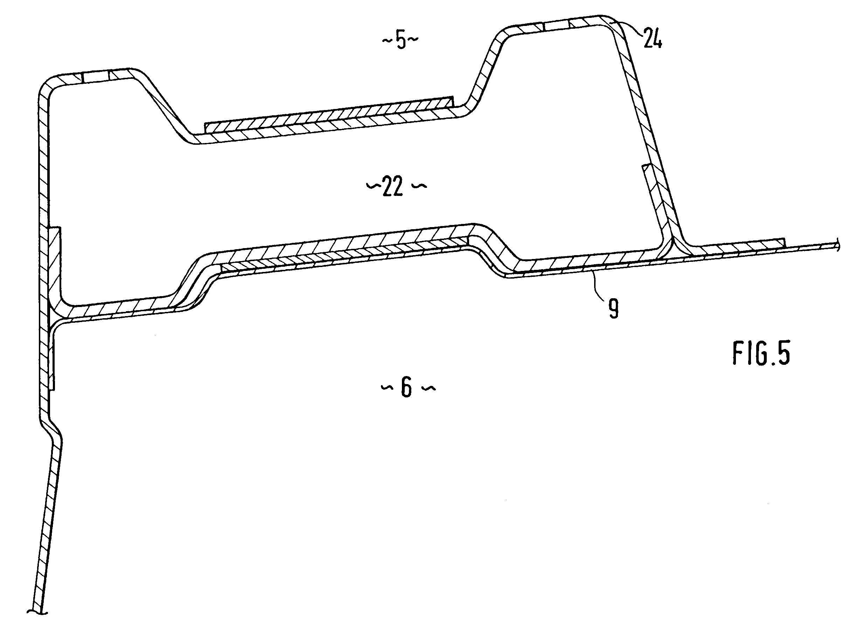

Die Nische 22 ist in einem oberen, seitlich außenliegenden Bereich 23 der vorderen Begrenzungswand 9 des Verdeckkastens 5 angeordnet. Gemäß Fig. 5 wird die Nische 22 durch die vordere Begrenzungswand 9 und ein etwa hutförmig profiliertes Schließteil 24 gebildet, das auf der der Rücksitzanlage 6 abgekehrten Seite auf die Begrenzungswand 7 und einen darunterliegenden kastenförmigen Querträger 25 aufgesetzt ist.

Das Schließteil 24 weist auf der dem Verdeckkasten 5 zugekehrten Seite eine Öffnung 26 zum Einsetzen des Gurtaufrollers 19 auf. Der Gurtaufroller 19 wird auf einen vertikal nach oben ragenden Flansch 27 des Schließteiles 24 aufgesetzt und ist mittels einer Befestigungsschraube 28 in Lage gehalten. Die Befestigungsschraube 28 wird in eine Schweißmutter 29 eingedreht, die innerhalb der Nische 22 am Schließteil 24 vorgesehen ist. Das Führungselement 20 für den Schultergurt 16 wird durch ein bogenförmiges Versteifungsteil 30 gebildet, das mit dem Schließteil 24 und der vorderen Begrenzungswand 9 fest verbunden ist. An der Außenseite des Versteifungsteiles 30 ist eine Abdeckung 31 aus einem geeigneten Kunststoff vorgesehen. Die Abdeckung 31 ist dem bogenförmiges Verlauf des Versteifungsteiles 30 angepaßt und örtlich mit dem Versteifungsteil 30 durch Schrauben, Klipsen oder dgl. verbunden. Die Abdeckung 31 weist zumindest auf der der Rücksitzanlage 6 zugekehrten Seite seitliche Stege 32 zur Führung des Schrägschultergurtes 16 auf. Ferner ist im oberen Bereich der Nische 22 und zwar innerhalb des Versteifungsteiles 30 eine zusätzliche, winkelförmige Verstärkung 33 vorgesehen, die mit einem horizontal abgewinkelten Flansch 34 des Schließteiles 24 und dem Versteifungsteil 30 verbunden ist. Eine rückwärtige Gehäusewand 35 des Gurtaufrollers 19 liegt an der dem Verdeckkasten 5 zugekehrten Seite des Flansches 27 an.

Durch die verdeckte Anordnung des Gurtaufrollers 19 in der Nische 22 wird die freie Gestaltung des Aufbaues 3 bzw. des Verdeckkastens 5 nicht eingeschränkt und der Gurtaufroller ist keiner mechanischen Belastung ausgesetzt. Ferner ist der Gurtaufroller 19 einfach und schnell montierbar bzw. demontierbar. Durch die trägerartige Ausgestaltung der Nische 22 und die Anbindung an den kastenförmigen Querträger 25 können große Kräfte über das Sicherheitsgurtsystem 14 in den Aufbau übertragen werden. Der obere Rand des Führungselementes 20 verläuft in Höhenrichtung gesehen etwas unterhalb der angrenzenden Klappe 7 des Verdeckkastens 5 und ist der Klappe 7 vorgelagert (Fig. 4).

## Patentansprüche

1. Sicherheitsgurtanordnung für ein Kraftfahrzeug (1) mit oben offener Karosserie und einem Verdeckkasten (5), wobei ein oberes Ende eines Schrägschultergurtes (16) mit einem Führungselement (20) zusammenwirkt, das an einem feststehenden Bauteil angeordnet ist und wobei ein vom Führungselement (20) vertikal nach unten ragender Gurtabschnitt an seinem freien Ende mit einem Gurtroller (19) in Wirkverbindung steht, der über eine Öffnung (26) in eine Nische (22) des feststehenden Bauteils eingesetzt und in dieser in Lage gehalten ist, **dadurch gekennzeichnet**, daß der Schrägschultergurt (16) für die Rücksitzanlage (6) eines Kraftfahrzeuges (1) über das am oberen Rand (21) einer aufrechten, vorderen Begrenzungswand (9) des Verdeckkastens (5) angeordnetes Führungselement (20) hinweggeführt ist und danach innerhalb des Verdeckkastens (5) vertikal nach unten zum Gurtaufroller (19) verläuft, wobei der Gurtaufroller (19) in einer Nische (22) des Verdeckkastens (5) angeordnet ist und über eine vom Verdeckkasten (5) aus zugängige Öffnung (26) in die Nische (22) eingesetzt ist.

2. Sicherheitsgurtanordnung nach Anspruch 1, **dadurch gekennzeichnet**, daß die Nische (22) in einem oberen, seitlich außenliegenden Bereich der vorderen Begrenzungswand (9) des Verdeckkastens (5) angeordnet ist.

3. Sicherheitsgurtanordnung nach Anspruch 1, **dadurch gekennzeichnet**, daß die Nische (22) durch die vordere Begrenzungswand (9) und ein etwa hutförmig profiliertes Schließteil (24) gebildet wird, das auf der der Rücksitzanlage (6) abgekehrten Seite auf die Begrenzungswand (9) und den darunterliegenden Querträger (25) aufgesetzt ist.

4. Sicherheitsgurtanordnung nach Anspruch 3, **dadurch gekennzeichnet**, daß das Schließteil (24) auf der dem Verdeckkasten (5) zugewandten Seite eine Öffnung (26) zum Einsetzen des Gurtaufrollers (19) aufweist.

5. Sicherheitsgurtanordnung nach Anspruch 4, **dadurch gekennzeichnet,** daß im unteren Bereich der Öffnung (26) ein vertikal nach oben abgestellter Flansch (27) zum Befestigen des Gurtaufrollers (19) vorgesehen ist.

6. Sicherheitsgurtanordnung nach Anspruch 5, **dadurch gekennzeichnet**, daß an der Innenseite des Flansches (27) eine Schweißmutter (29) angebracht ist, in die eine Befestigungsschraube (28) für den Gurtaufroller (19) eingedreht ist.

7. Sicherheitsgurtanordnung nach Anspruch 6, **dadurch gekennzeichnet**, daß das Führungselement (20) durch ein bogenförmiges Versteifungsteil (30) gebildet wird, das mit dem Schließteil (24) und der vorderen Begrenzungswand (9) fest verbunden ist und daß an der Außenseite des Versteifungsteiles (30) eine Abdeckung (31) aus Kunststoff vorgesehen ist.

8. Sicherheitsgurtanordnung nach Anspruch 7, **dadurch gekennzeichnet**, daß die Abdeckung (31) über eine Klipsverbindung am darunterliegenden Versteifungsteil (30) befestigt ist.

9. Sicherheitsgurtanordnung nach Anspruch 8, **dadurch gekennzeichnet**, daß innerhalb der Nische (22) eine Verstärkung (33) vorgesehen ist, die einen horizontal abgestellten Flansch (34) des Schließteiles (24) mit dem Versteifungsteil (30) verbindet.

10. Sicherheitsgurtanordnung nach Anspruch 9, **dadurch gekennzeichnet**, daß auf der der Rücksitzanlage (6) zugekehrten Seite der Abdeckung (31) seitliche Stege (32) zur Führung des Schrägschultergurtes (16) vorgesehen sind.

11. Sicherheitsgurtanordnung nach Anspruch 10, **dadurch gekennzeichnet**, daß zum Befestigen des Gurtaufrollers (19) eine rückwärtige Gehäusewand (35) an der dem Verdeckkasten (5) zugekehrten Seite des abgestellten Flansches (27) anliegt.

## Claims

1. A safety-belt arrangement for a motor vehicle (1) with the bodywork open at the top and with a cover casing (5), wherein an upper end of a diagonal shoulder belt cooperates with a guide member (20) mounted on a stationary component, and wherein a belt portion projecting vertically downwards from the guide member (20) is operatively connected at its free end to a belt roller (19) inserted by way of an opening (26) into a recess (22) in the stationary component and held in position therein, **characterized in that** the diagonal shoulder belt (16) for the rear seat arrangement (6) of a motor vehicle (1) is passed over the guide member (20) arranged on the upper edge (21) of an upright front boundary wall (9) of the cover casing (5), and then runs inside the cover casing (5) vertically downwards to the belt roller (19), wherein the belt roller (19) is arranged in a recess (22) in the cover casing (5) and is inserted into the recess (22) by way of an opening (26) accessible from the cover casing (5).

2. A safety-belt arrangement according to Claim 1, **characterized in that** the recess (22) is arranged in an upper, laterally outward area of the front boundary wall (9) of the cover casing (5).

3. A safety-belt arrangement according to Claim 1, **characterized in that** the recess (22) is formed by the front boundary wall (9) and a closure part (24) substantially hat-shaped in section and mounted on the side remote from the rear seat arrangement (6) on the boundary wall (9) and the transverse support (25) situated thereunder.

4. A safety-belt arrangement according to Claim 3, **characterized in that** the closure part (24) is provided on the side facing the cover casing (5) with an opening (24) for the insertion of the belt roller (19).

5. A safety-belt arrangement according to Claim 4, **characterized in that** a flange (27) projecting vertically upwards is provided in the lower area of the opening (26) for fastening the belt roller (19).

6. A safety-belt arrangement according to Claim 5, **characterized in that** a welded nut (29), into which a fastening bolt (28) for the belt roller (19) is screwed, is arranged on the inside of the flange (27).

7. A safety-belt arrangement according to Claim 6, **characterized in that** the guide member (20) is formed by an arcuate stiffening part (30) rigidly connected to the closure part (24) and the front boundary wall (9), and a covering (31) of plastics material is provided on the outside of the stiffening part (30).

8. A safety-belt arrangement according to Claim 7, **characterized in that** the covering (31) is secured by way of a clip fastening to the stiffening part (30) situated thereunder.

9. A safety-belt arrangement according to Claim 8, **characterized in that** a reinforcement (33), connecting a horizontally projecting flange (34) of the closure part (24) to the stiffening part (30), is provided inside the recess (22).

10. A safety-belt arrangement according to Claim 9, **characterized in that** lateral webs (32) are provided on the side of the covering (31) facing the rear seat arrangement (6) in order to guide the diagonal shoulder belt (16).

11. A safety-belt arrangement according to Claim 10, **characterized in that**, in order to secure the belt roller (19), a rear casing wall (35) rests against the side of the projecting flange (27) facing the cover casing (5).

## Revendications

1. Agencement de ceinture de sécurité pour un véhicule automobile (1 avec carrosserie ouverte à sa partie supérieure et un logement de capote (5), une extrémité supérieure d'une ceinture oblique de poitrine coopérant avec un élément de guidage (20) qui est placé sur un composant fixe et une section de ceinture, dépassant verticalement vers le bas de l'élément de guidage (20), étant en liaison active à son extrémité libre avec un enrouleur de ceinture (19), qui est inséré à travers une ouverture (26) dans une niche (22) du composant fixe et est maintenu dans cette position, caractérisé en ce que la ceinture oblique de poitrine (16) pour les sièges arrière (6) d'un véhicule automobile (1) passe sur l'élément de guidage (20), placé sur le bord supérieur (21) d'une paroi de délimitation (9) avant, verticale, du logement de capote et s'étend ensuite verticalement vers le bas à l'intérieur du logement de capote (5), vers l'enrouleur de ceinture (19), l'enrouleur de ceinture (19) étant placé dans une niche (22) du logement de capote (5) et inséré dans la niche (22) par une ouverture (26), accessible à partir du logement de capote (5).

2. Agencement de ceinture de sécurité selon la revendication 1, caractérisé en ce que la niche (22) est placée dans une zone supérieure située sur le côté à l'extérieur de la paroi de délimitation (9) avant du logement de capote (5).

3. Agencement de ceinture de sécurité selon la revendication 1, caractérisé en ce que la niche (22) est formée par la paroi de délimitation (9) avant et un élément de fermeture (24) profilé à peu près en forme de chapeau, qui est placé sur le côté, opposé aux sièges arrière (6), sur la paroi de délimitation (9) et la traverse (25) située au-dessous.

4. Agencement de ceinture de sécurité selon la revendication 3, caractérisé en ce que l'élément de fermeture (24) comporte une ouverture (26) pour l'introduction de l'enrouleur de ceinture (9), sur le côté tourné vers le logement de capote (5).

5. Agencement de ceinture de sécurité selon la revendication 4, caractérisé en ce qu'il est prévu dans la zone inférieure de l'ouverture (24), une bride (27) en retrait, dirigée verticalement vers le haut, pour la fixation de l'enrouleur de ceinture (19).

6. Agencement de ceinture de sécurité selon la revendication 5, caractérisé en ce que sur le côté intérieur de la bride (27) il est fixé un écrou soudé (29) dans lequel est vissée une vis de fixation (28) pour l'enrouleur de ceinture (19).

7. Agencement de ceinture de sécurité selon la revendication 6, caractérisé en ce que l'élément de guidage (20) est formé par un raidisseur (30) en arc qui est solidaire de l'élément de fermeture (24) et de la paroi de délimitation (9) avant et en ce que sur le côté extérieur du raidisseur (30) il est prévu un capot (31) en matière plastique.

8. Agencement de ceinture de sécurité selon la revendication 7, caractérisé en ce que le capot (31) est fixée sur le raidisseur (30) situé au-dessous, par un assemblage clipsé.

9. Agencement de ceinture de sécurité selon la revendication 8, caractérisé en ce qu'à l'intérieur de la niche (22) il est prévu un renfort (33) qui relie une bride (34) déviée horizontalement de l'élément de fermeture (24) au raidisseur (30).

10. Agencement de ceinture de sécurité selon la revendication 9, caractérisé en ce que sur le côté, tourné vers les sièges arrière (6), du capot (31), il est prévu des cloisons (32) latérales destinées à guider la ceinture oblique de poitrine (16).

11. Agencement de ceinture de sécurité selon la revendication 10, caractérisé en ce que pour fixer l'enrouleur de ceinture (19) une paroi de boîtier (35) arrière s'applique contre le côté tourné vers le logement de capote (5), de la bride (27) déviée.
